# EUROPEAN PATENT APPLICATION

(11) **EP 1 195 749 A2**
(43) Date of publication of application: **10.04.2002**
(21) Application number: 01123274.1
(22) Date of filing: 04.10.2001
(51) Int. Cl.: G11B 7/0045, G11B 7/007, G11B 7/125

(54) **Multi-layer rotary recording medium and recording/reproducing method and apparatus thereof**

(30) Priority: 05.10.2000 JP 2000306596
(71) Applicant: Pioneer Corporation, Meguro-ku, Tokyo (JP)
(72) Inventor: Yamamoto, Kaoru, Corporate R & D Lab., Tsurugashima-shi, Saitama 350-2288 (JP)
(74) Representative: Klingseisen, Franz, Dipl.-Ing.

(57) **Abstract**

A recording method includes a reading step of detecting a reflection light from a recording layer to which a recording is to be made and converting the detected light into a read signal; a detecting step of detecting a position of a preformatted area of a recording layer which the optical beam transmits therethrough other than the recording layer to which a recording is to be made; and a correcting step of correcting intensity of an irradiation light beam or a reproduced signal on the basis of the read signal and the preformatted area position. An apparatus for carrying out the recording method is also provided.

## Description

### BACKGROUND OF THE INVENTION

### 1. Field of the Invention

The present invention relates to a method and apparatus for recording and/or reproducing an optical recording medium and, more particularly to a method and apparatus for recording and/or reproducing a multi-layer rotary recording medium having a plurality of recording layers having data recording regions divided by preformatted regions,

### 2. Description of the Related Art

Recently, multi-layer optical disc capable of increasing the recording capacity per surface is developed as a large-capacity recording medium. The multi-layer optical disc has a structure having a plurality of laminated or stacked recording layers spaced at a comparatively small predetermined interval. Also, a multi-layer optical disc capable of recording has been developed using a recording medium, for example, a phase-change medium.

Description is made below on an example of a two-layer DVD (Digital Versatile Disc) having two recording layers using a phase-change medium. The two-layer DVD disc has a structure having phase-change recording films formed in an upper or first recording layer (i.e. layer closer to an optical-pickup objective lens) and a lower or second recording layer. During recording to such a two-layer disc, laser light is focused to any of the recording layers to record or reproduce a signal to or from the recording layer.

In the two-layer DVD disc or the like, consideration is given to the case where an irradiation light beam is focused on the second recording layer (hereinafter, referred simply to as second layer) to carry out recording and/or reproduction (hereinafter, referred to as recording/reproduction). More particularly, consideration is given to a case where a light beam is irradiated on the second layer while being passed through the first recording layer (hereinafter, referred simply to as first layer) to carry out recording/reproduction of a data signal. During the recording/reproducing, the affections of the first layer is an amount of change of the reflection light reflected from the first layer to reach a light-receiving system and an amount of change of the transmission light through the first layer to the second layer. Concerning the change in amount of the reflection light from the first layer, the affection can be reduced by devising the structure of a detecting system or the like. However, the amount of change in the transmission light through the first layer appears as a fluctuation in recording light intensity during recording and as fluctuation in reproduced-signal level during reproduction, which in some cases cannot be ignored.

When using a phase-change medium, for example, of germanium antimony tellurium (GeSbTe) in the recording layer, transmittance is different between a crystalline region and an amorphous region, i.e., the transmittance through the crystalline region is lower than the transmittance through the amorphous region. The phase-change medium has a crystalline region of almost 100% in an unrecorded region, while a crystalline region and an amorphous region exist in a mixed manner in a recorded region. Also, the recorded region in the first layer is out of focus and hence a record signal per se is not reproduced there. However, the transmittance of a light beam is an averaged transmittance of those through the crystalline region and the amorphous region. Consequently, during reproducing from the second layer, the amount of reception-light (i.e. RF signal level during reproduction) varies according to whether the first layer is recorded or unrecorded.

In such a case, when a ratio of an area occupied by the crystalline region and an area occupied by the amorphous region is constant within the beam at the first layer, the transmittance thereof is also constant thereby avoiding the foregoing variation.

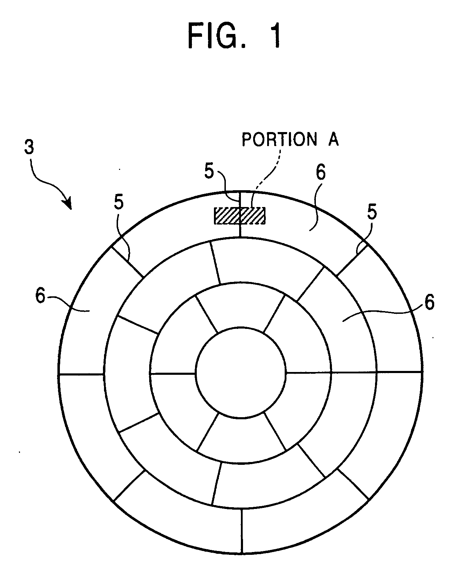

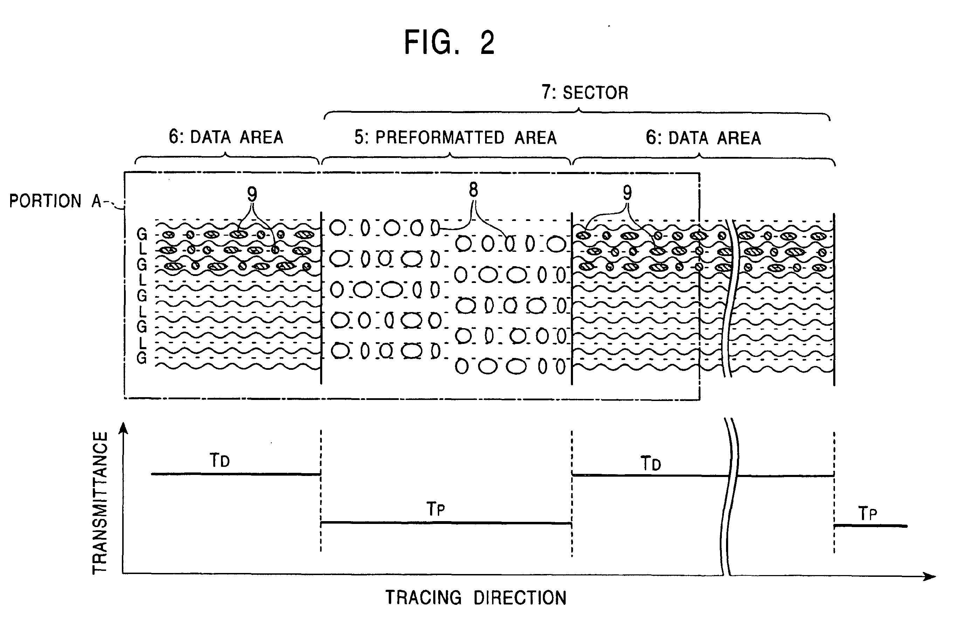

However, the multi-layer optical recording disc is generally provided with preformatted regions where no data signals are recorded. Referring to Fig. 1 and Fig. 2, description is made for a DVD-RAM (Random Access Memory) as an example. In the optical disc 3, the recording region is divided by preformatted areas 5 in a tracing direction of a light beam (i.e. in the tangential or circumferential direction) to form a plurality of data areas 6 in a concentric form. Also, one preformatted area 5 and the adjacent one data area 6 constitute a sector 7.

Fig. 2 shows a typical magnification view of a region of a preformatted area 5 and its vicinity (portion A), together with the transmittance in the areas thereof. Information data, such as an address, is recorded in the preformatted area 5 in the form of emboss pits 8. The data area 6 comprises lands (L) and grooves (G). Record marks 9 are formed in the region where data is recorded.

As shown in Fig. 2, the average transmittance of a data area 6 where data is recorded (T_{D}) is greater than the transmittance of the preformatted area 5 (T_{P}). The transmittance of the first-layer reformatted area 5 varies, hence varying the recording light intensity or reproduced signal intensity in the second layer during recording or reproduction. Usually, no recording is made to the preformatted area. Accordingly, in order to avoid an adverse effect during recording or reproduction of the multi-layer optical recording medium having preformatted area, there is a need to completely match the positions of the preformatted areas between the first layer and the second layer. In other words, there is no affection upon recording or reproducing when a second-layer preformatted area is provided just beneath a first-layer preformatted area where the amount of transmission light decreases. However, there has been practical difficulty in matching the positions between the preformatted areas in the manufacturing process.

Accordingly, where there is deviation in preformatted area position between the layers, there is a necessity to avoid the adverse affection upon recording/reproducing operation such as variation in reproduced RF signal caused by variation in transmittance, lower SN (signal-to-noise ratio), etc. as in the foregoing.

Furthermore, in the correction for avoiding such an adverse effect, there is a need to correctly detect a preformatted area position of the layer other than the layer to be actually recorded.

For this reason, the preformatted areas between the layers, if overlapped even in part, make it difficult to detect a correct position and make a correction signal complicated. Consequently, there is a necessity to distinctly deviate the preformatted areas between the layers, on the premise of making the correction.

### OBJECT AND SUMMARY OF THE INVENTION

It is an object of the present invention to provide a high-performance multi-layer optical rotary recording medium suitable for performing stable recording/reproduction, and a recording/reproducing method and apparatus for the multi-layer optical rotary recording medium.

According to one aspect of the present invention, there is provided a recordable multi-layer optical recording medium laminated with a plurality of recording layers each having data recording areas divided in a tracing direction of a light beam by preformatted areas, wherein the preformatted areas are formed without any overlap with one another in a laminated direction between the recording layers.

According to another aspect of the present invention, there is provided a recording method of a recordable multi-layer rotary recording medium having a plurality of recording layers each having data recording areas divided in a tracing direction of a light beam by preformatted areas, which comprises the steps of a reading step of detecting a reflection light from a recording layer to which a recording is to be made and converting the detected light into a read signal; a detecting step of detecting a position of a preformatted area of a recording layer which the optical beam transmits therethrough other than the recording layer to which a recording is to be made; and a correcting step of correcting intensity of an irradiation light beam upon recording based on the read signal and the preformatted area position.

According to another aspect of the present invention, there is provided a reproducing method of a recordable multi-layer rqtary recording medium having a plurality of recording layers each having data recording areas divided in a tracing direction of a light beam by preformatted areas, which comprises the steps of a reading step of detecting a reflection light from a recording layer from which a reproduction is to be made and converting the detected light into a read signal; a detecting step of detecting a position of a preformatted area of a recording layer which the optical beam transmits therethrough other than the recording layer from which a reproduction is to be made; and a correcting step of correcting a reproduced signal upon reproduction on the basis of the read signal and the preformatted area position.

According to another aspect of the present invention, there is provided a recording apparatus of a recordable multi-layer rotary recording medium having a plurality of recording layers each having data recording areas divided in a tracing direction of a light beam by preformatted areas, which comprises a reading portion for detecting a reflection light from a recording layer to which a recording is to be made and converting the detected light into a read signal; a detecting portion for detecting a position of a preformatted area of a recording layer which the optical beam transmits therethrough other than the recording layer to which a recording is to be made; and a correcting portion for correcting intensity of an irradiation light beam upon recording based on the read signal and the preformatted area position.

According to another aspect of the present invention, there is provided a reproducing apparatus of a recordable multi-layer rotary recording medium having a plurality of recording layers each having data recording areas divided in a tracing direction of a light beam by preformatted areas, which comprises a reading portion for detecting a reflection light from a recording layer from which a reproduction is to be made and converting the detected light into a read signal; a detecting portion for detecting a position of a preformatted area of a recording layer which the optical beam transmits therethrough other than the recording layer from which a reproduction is to be made; and a correcting portion for correcting a reproduced signal upon reproduction on the basis of the read signal and the preformatted area position.

### BRIEF DESCRIPTION OF THE DRAWINGS

Fig. 1 is a schematic view illustrating a structure of preformatted areas, data areas and sectors in an optical disc;
Fig. 2 is a magnifying view illustrating a preformatted area and data area, together with transmittances of the areas;
Figs. 3A and 3B are plan views respectively showing positional deviations of preformatted areas due to eccentricity and rotation between a first recording layer and a second recording layer;
Fig. 4 is a plan view of a two-layer optical rotary recording medium of a first embodiment of the present invention;
Fig. 5 is a sectional view in a tracing direction showing a relationship between the preformatted areas 5A and 5B and data areas 6A, 6B of the two-layer optical rotary recording medium of the first embodiment of the present invention;
Fig. 6 is a block diagram showing a configuration of a recording/reproducing apparatus of a second embodiment of the present invention;
Fig. 7 is a flowchart showing a procedure of recordation/reproduction correcting operation for the recording/reproducing apparatus of the second embodiment of the present invention;
Fig. 8 shows a reproduced RF signal read from a layer (second layer) to which a recording is to be made, for one rotation of the optical disc;
Fig. 9 shows a variation amount due to a first-layer preformatted area (first-layer preformat-signal component);
Fig. 10 shows one example of a recordation correcting signal;
Fig. 11 shows a reproduction-gain correcting signal and a reproduction-offset correcting signal;
Fig. 12 illustrates a variation in reflection light amount;
Fig. 13 is a block diagram showing a configuration of a recording/reproducing apparatus of a third embodiment of the present invention;
Fig. 14 is a block diagram showing a configuration of a recording/reproducing apparatus of a fourth embodiment of the present invention;
Fig. 15 illustrates an occurrence time (Ti, i = 1, 2, ...) of first-layer preformat-signals (SP1) with respect to a reference time;
Fig. 16 is a figure showing a relationship between a magnitude of an eccentricity (Δx, Δy) and rotation-direction deviation (θ) between the recording layers in the disc and an occurrence time of a variation due to a first-layer preformat-signal in a position of radius (r).
Fig. 17 is a block diagram showing a configuration of a recording/reproducing apparatus of a sixth embodiment of the present invention;
Fig. 18 is a flowchart showing a procedure of a recordation correcting operation in the sixth embodiment of the present invention; and
Fig. 19 is a flowchart showing the procedure of a recordation correcting operation in the sixth embodiment of the present invention,

### DETAILED DESCRIPTION OF THE PREFERRED EMBODIMENTS

Embodiments of the present invention will be described in detail with reference to the drawings. Note that, in the following description, the substantially equivalent structural elements are attached with the same reference numerals.

### First Embodiment

Before describing a first embodiment of the present invention, described is the positional deviation between pre-format areas. Note that the description below is on the example of an optical disc having two recording layers using a phase-change medium, for simplicity of description. Also, the description of the example is on that a first recording layer (upper layer) 11 and a second recording layer (lower layer) 12 are formed in the optical disc in the order with respect to an irradiation direction of a laser beam for recording or reproducing information data signals. The second layer 12 is a recording layer distant from an objective lens for focusing a laser beam.

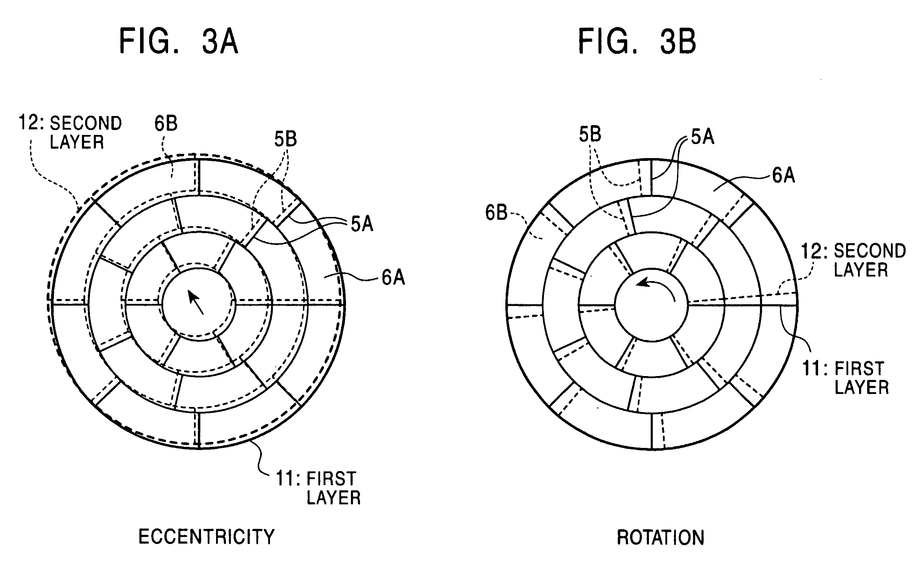

Figs. 3A and 3B are plan views for illustrating a positional deviation between the preformatted areas 5A and 5B respectively in the first recording layer 11 and the second recording layer 12 (hereinafter, referred to as first layer and second layer). The first layer 11 is shown with the solid lines and the second layer 12 with the broken lines. The cause of positional deviation occurrence between the preformatted areas 5A and 5B is to be classified as those due to the deviation of the centers of the first layer 11 and the second layers, i.e. eccentricity (Fig. 3A) and those due to the deviation in rotational direction (Fig. 3B).

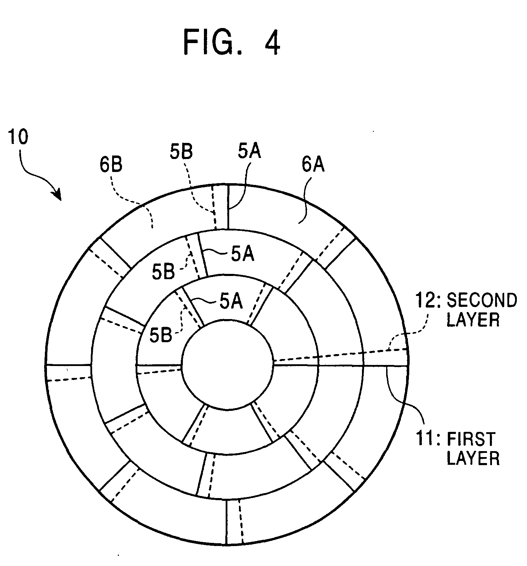

Fig. 4 is a plan view illustrating a two-layer optical rotary recording medium 10 of a first embodiment of the present invention. Similarly to Fig. 3, representation is only made by the lines showing the division of the recording layers, for simplicity of description. Note that only deviation in rotational direction is shown in Fig. 4. The first layer 11 and the second layer 12 have recording areas divided in a concentric (annular) form. Fig. 4 shows the case in which the recording areas in the outer periphery of the fist layer 11 and the second layer 12 are each divided into eight data areas 6A, 6B by preformatted areas 5A, 5B. Similarly, the recording areas in the intermediate and inner peripheral regions are, respectively, divided into seven and six data areas 6A, 6B. The first layer 11 and the second layer 12 have a deviation of eccentricity and/or rotation which is intentionally provided in the manufacturing process, whereby the preformatted areas 5A and 5B are formed in distinctively deviated positions.

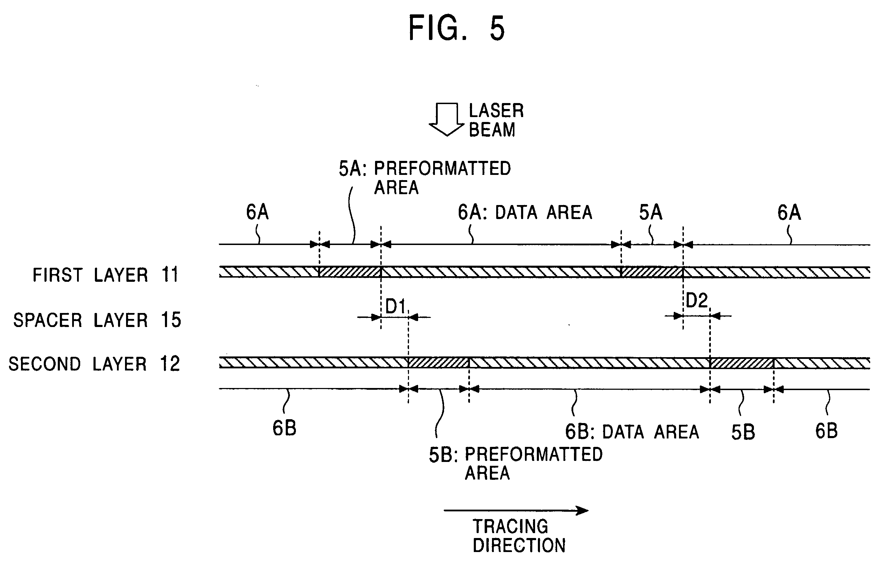

Fig. 5 is a sectional view in a beam tracing direction, showing a relationship between the preformatted areas 5A and 5B and the data areas 6A, 6B of the two-layer optical rotary recording medium 10. The preformatted areas 5A and 5B are formed deviated throughout the plane of the recording medium 10 in such a manner that the preformatted areas 5A and 5B does not have overlap portions in a direction of recording-layer lamination. By thus forming the preformatted areas in each recording layer of the recording medium 10, it is possible to easily separate and extract a preformat-signal from a read signal.

Note that the above-described recording-area divisional form and division number is a mere exemplification, i.e., it is satisfactory to make division so as to avoid overlaps of preformatted areas. Also, although Fig. 4 exemplified for a deviation in a rotation direction, the present invention can applied to a case wherein deviation due to eccentricity exists. In brief, the preformatted areas should be formed without overlap in the direction of lamination between the recording layers.

### Second Embodiment

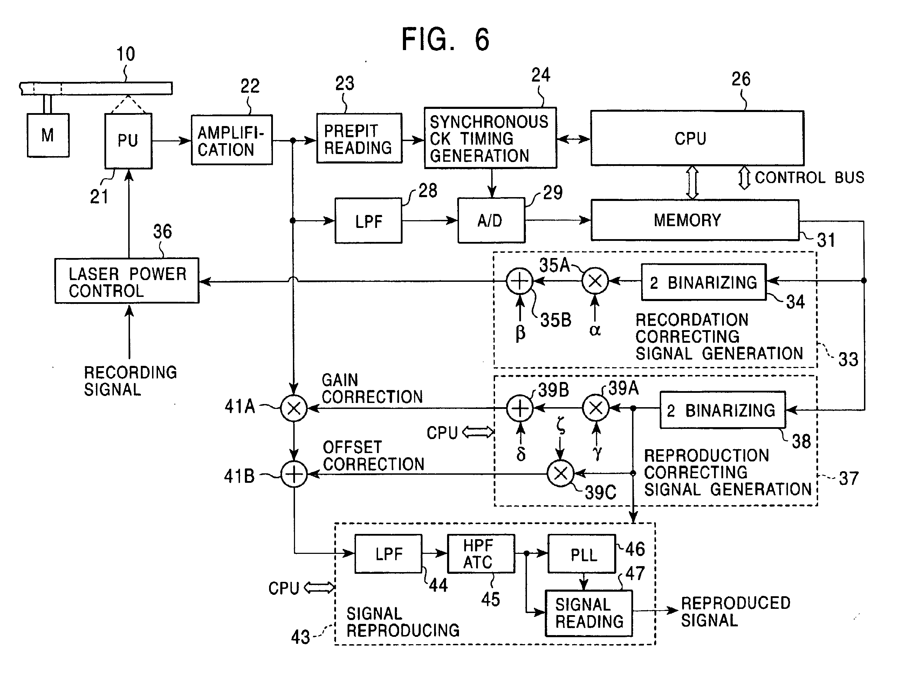

Fig. 6 is a block diagram showing a configuration of a recording/reproducing apparatus (hereinafter, referred simply to as recording/reproducing apparatus) of a second embodiment of the present invention. An optical pickup 21 includes an optical system including a focus lens, a beam splitter and an objective lens, a light-source laser diode and a photodetector (not shown). The optical pickup 21 emits a light beam, as recording or reproducing light, on an optical disc 10 which is a recording medium. The optical pickup 21 detects a reflection light from a recording layer of the optical disc, thereby reading out a signal corresponding to a track and information pit or recording mark formed on the optical disc 10. Tracking servo and focus servo control on the objective lens is performed in order to correctly focus the light beam on an information recording surface of the optical disc 10 (not shown).

The read signal (RF signal) supplied from the optical pickup 21 is amplified in an amplifier circuit 22 and supplied to a prepit reading circuit 23. The prepit reading circuit 23 extracts prepit and wobble signals. A synchronizing clock and timing signal generating circuit 24 generates a clock signal (CK) and a timing signal synchronized with rotation of the optical disc 10. The generated signals are supplied to a control section (CPU) 26 for controlling the apparatus overall. The generated signals are used for various control purposes. The CPU 26 detects from the signals a preformatting position of a recording layer to which a recording is to be made. The CPU 26 may be provided with or connected to a storage device (not shown) for storing data as necessary.

The read signal amplified in the amplifier circuit 22 is also supplied to a low-pass filter (LPF) 28 and only a low-frequency component of the signal is supplied to an analog-digital (A/D) converter 29. The signal converted into a digital signal in the A/D converter 29 is supplied to a memory 31 in accordance with a timing signal from the timing signal generating circuit 24 and stored therein.

The signal stored in the memory 31 is supplied to a recordation-correcting signal generating circuit 33. The signal is binarized in a binarizing circuit 34 provided in the recordation-correcting signal generating circuit 33, and then multiplied by a coefficient (α) in a multiplier 35A and added with an offset (β) in an adder 35B, thereby a recordation correcting signal is generated. The recordation correcting signal is sent from the recordation-correcting signal generating circuit 33 to a laser power control circuit 36. In the laser power control circuit 36, a laser beam power upon recording is controlled on the basis of the recordation-correcting signal.

The signal stored in the memory 31 is also supplied to a reproduction-correction signal generating circuit 37. This signal is binarized in a binarizing circuit 38 provided in the reproduction-correction signal generating circuit 37. and then multiplied by a coefficient (γ) and added with an offset (δ) in a multiplier 39A and an adder 39B, thereby a reproduction-gain correction signal is generated which represents an amount of gain-correction (hereinafter, simply referred to as gain-correction amount) upon reproduction. The binary signal from the binarizing circuit 38 is multiplied by a coefficient (ζ) in a multiplier 39C, thereby a reproduction-offset correction signal is generated which represents an offset correction amount during reproduction. In the multipliers 41A and adder 41B, the read signal from the amplifier circuit 22 is corrected using the reproduction-gain correction signal and the reproduction-offset correction signal and then supplied to a signal reproducing system 43.

Note that the recordation-correcting signal generating circuit 33 and the reproduction-correction signal generating circuit 37 are connected to a control bus of the CPU 26, and controlled by the CPU 26. The control signal CS supplied through the control bus contains the foregoing coefficients and offset values (α, β) and (γ, δ, ζ).

In the above, although the recordation-correcting signal generating circuit 33 and the reproduction-correction signal generating circuit 37 are shown by separate circuit blocks, a digital signal processor (DSP) or the like may be used. Also, the binarizing circuits 34, 38, although not necessarily required, are effective in reducing the scale of the processing circuit.

The signal reproducing system 43 is a general signal reproducing circuit formed by an LPF 44, a high-pass filter (HPF) and ATC circuit 45, a PLL circuit 46 and a signal reading circuit 47, to output a corrected read signal as a reproduced signal. The signal reproducing system 43 is controlled by the CPU 26 through a control bus. Incidentally, where there is difficulty in completely removing the variation in the other layer by the foregoing correction processing system during reproduction, it is preferred in some cases to change the frequency band of a feedback system, such as ATC, AGC and PLL. or hold the processing by the control of the CPU 26, for example. After hold cancellation, more stable reproduction control can be made by adaptively changing the band of the HPF or the PLL. Such adaptive processing can be made by implementing such control using the signal from the reproduction-correction signal generating circuit 37.

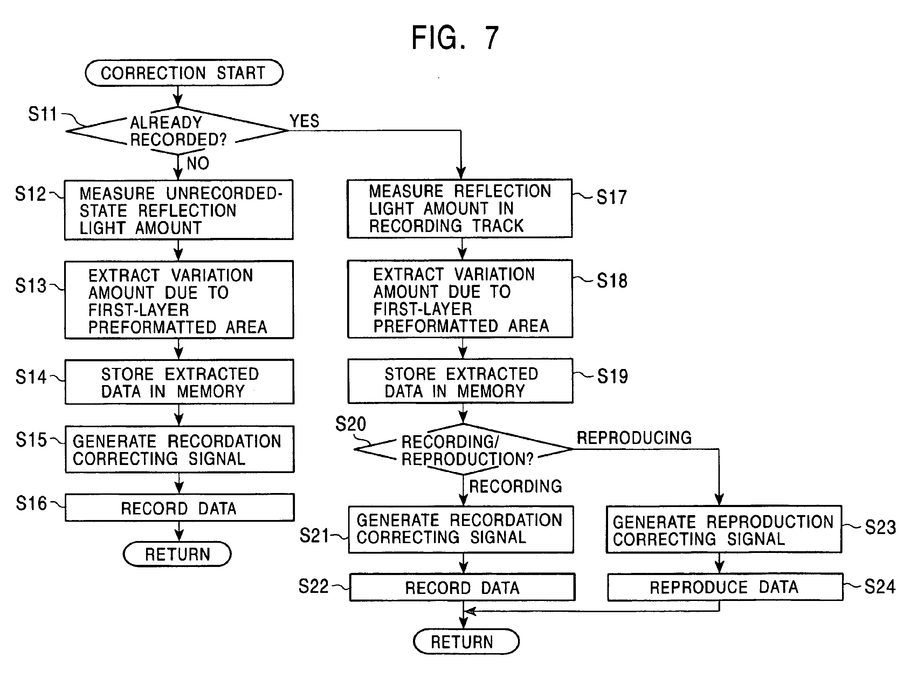

The recordation/reproduction correcting operation by the recording/reproducing apparatus will be described below with reference to a flowchart shown in Fig. 7. Note that the recordation/reproduction correcting operation is carried out under the control of the control section 26.

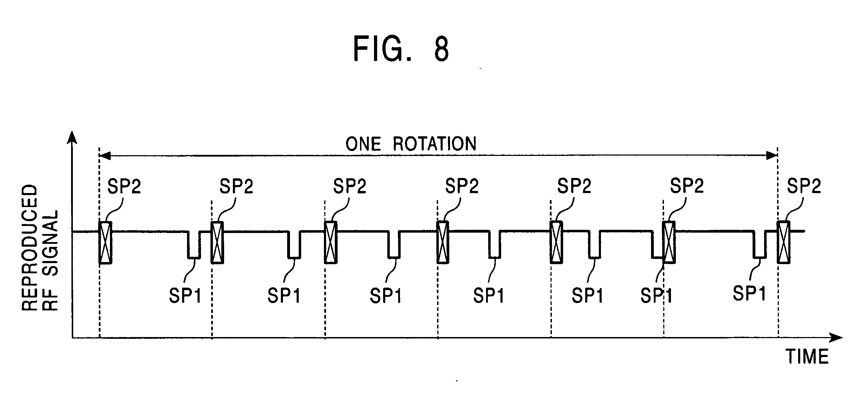

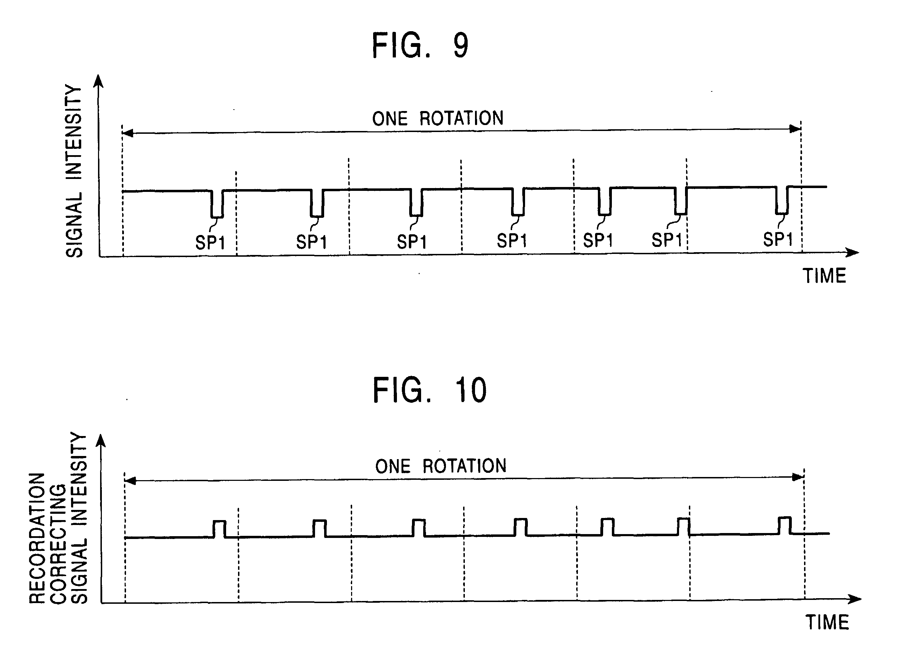

It is determined whether or not the disc set on the recording/reproducing apparatus is already recorded (step S11). When it is determined that the disc is not already recorded, the reflection-light amount change in an unrecorded state is measured as a reproduced RF signal (step S12). Fig. 8 shows a reproduced RF signal read from a layer (second layer 12) to which a recording is to be made, in respect of one rotation of the optical disc. The preformat-signals (SP2) of the second layer 12 appear with a period of the preformatted areas in the reproduced signal. On the other hand, the preformat-signals (SP1) of the first layer 11 appear in accordance with the eccentricity amount and the deviation in rotational direction, A signal representing a reflection light amount is obtained by the LPF 28 from the reproduced RF signal. From the measurement data of a reflection-light amount, an amount of variation due to the first-layer preformatted area (preformat-signal component of the first-layer) is extracted as shown in Fig. 9 (step S13). The extracted data is stored in the memory 31 (step S14).

The extracted data stored in the memory 31 is multiplied by a coefficient (α) and added with an offset (β) so as to cancel the variation amount due to the first-layer preformatted area, thereby generating a recordation-correcting signal shown in Fig. 10 (step S15). The recordation-correcting signal is sent to the laser-power control circuit 36, whereby recording is performed while correcting the recording laser power in accordance with the recordation-correcting signal (step S16).

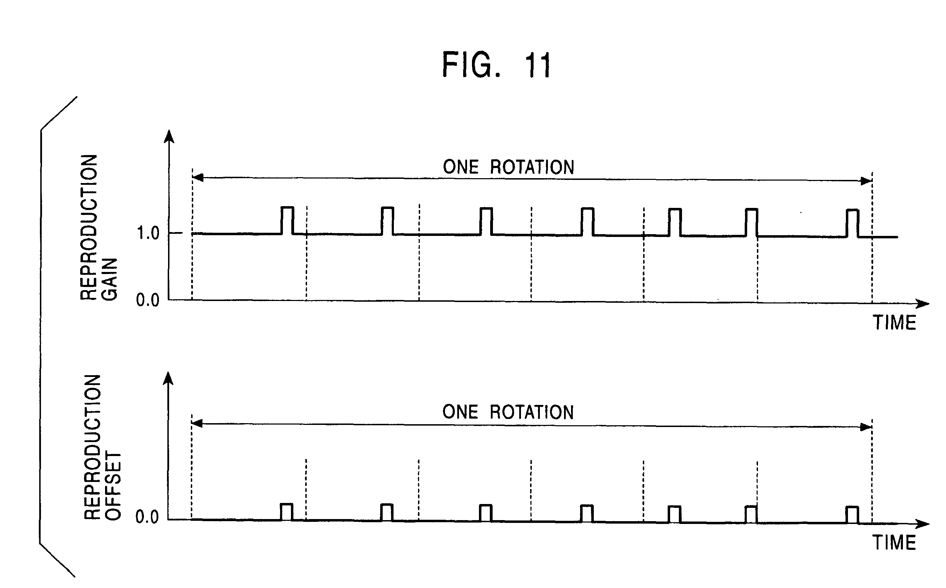

When it is determined that the disc is already recorded in step S11, the amount of reflection light from a recording track is measured (step S17). Note that, in step S17, measurement may be made on an amount of reflection light from an unrecorded track. Then, similarly to the foregoing, an amount of variation due to the first-layer preformatted area is extracted from the reflection-light-amount measurement data (step S18) and stored in the memory 31 (step S19). Thereafter, it is determined whether the next operation is recording operation or reproducing operation (step S20). In the case of recording operation, a recordation-correcting signal is generated (step S21) whereby recordation is carried out while correcting laser power on the basis of the recordation-correcting signal (step S22). In the case of reproducing operation in step S20, the extracted data stored in the memory 31 is processed so as to cancel the variation amount given by the first-layer preformatted area. As shown in Fig. 11, the extracted data is multiplied by a coefficient (γ) and added with an offset (δ) thereby generating a reproduction-gain correcting signal. Also, the extracted data is multiplied by a coefficient (ζ) thereby generating a reproduction-offset correcting signal (step S23). The read signal is corrected and reproduced by the reproduction-gain correcting signal and the reproduction-offset correcting signal (step S24). With the above procedure, correcting operation is executed during recordation/reproduction.

It should be noted that the read signal can be corrected continuously while performing data recording or reproducing operation by repeating the recordation/reproduction correcting procedure of the flowchart shown in Fig.7 as a loop.

The foregoing second embodiment can be applied to various cases. A modification is described below.

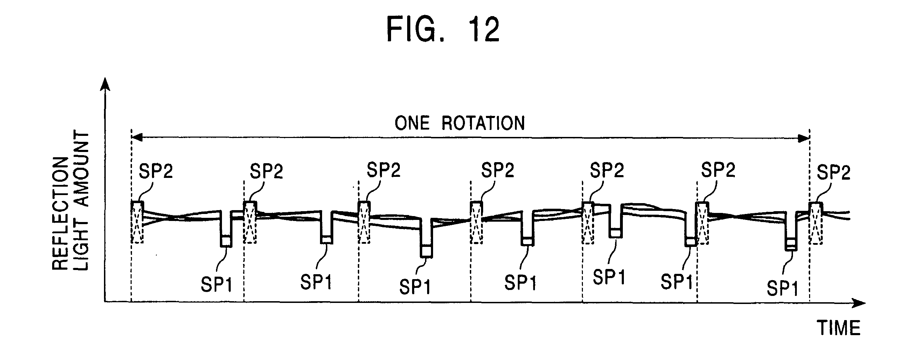

The reflection light amount varies on each measurement because the amount of reflection light from the optical disc varies according to various factors as shown in Fig. 12. Among such variations, the component of variation in time can be eliminated by averaging the measurement data that are synchronized with disc rotation. For example, this can be realized by making the memory 31 in a loop structure to multiply and add measurement data into the memory 31. Or otherwise, such operation processing can be realized by the control of the CPU 26.

In another modification, the amount of variation due to the first-layer preformatted area (first-layer preformat-signal component) can be extracted on the basis of a position of a preformatted area of the first layer, i.e. the recording layer through which an irradiation beam transmits. Usually, the preformatted area size (physical size) is previously determined. Accordingly, if a linear velocity upon reading is determined, when and what extent variation occurs can be determined by a calculation from a size (position) thereof, a distance between the recording layers and a reading optical-system setting. Consequently, by eliminating a variation smaller or greater than a predetermined value thus calculated as a variation caused by another factor, it is possible to extract only a variation due to a first-layer preformat-signal. This calculation processing can be realized by discrete circuit blocks, a DSP (not shown), hardware such as the CPU 26 or software installed in the CPU 26.

Furthermore, in another modification, the process of eliminating a variation smaller than a predetermined value can be carried out. by removing a low-frequency component from a measured signal by an LPF. for example, for extracting only a variation due to the foregoing first-layer preformat-signal,. Also, there is a merit that the amount of data stored can be reduced by using a measurement data signal and correction signal of a required frequency-band. Furthermore, the predetermined frequency-band measurement data signals thus obtained may be sampled and stored in the memory 31. This processing can be realized by providing a sampling circuit, a DSP, hardware such as the CPU 26 or software.

### Third Embodiment

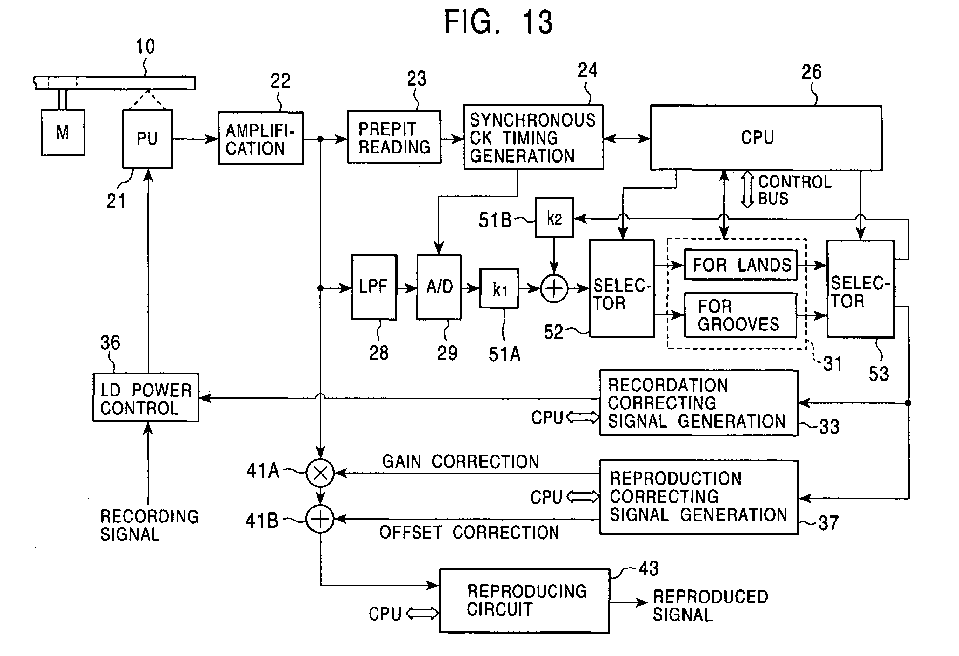

Fig. 13 is a block diagram showing a configuration of a recording/reproducing apparatus of a third embodiment of the present invention. The recording/reproducing apparatus of the embodiment is particularly suited for a multi-layer recording medium having a land/groove structure comprising lands and grooves.

In this embodiment, a memory 31 has two channels of storage areas for lands and grooves. Also, selectors 52, 53, for selecting respective ones of data on a land and a groove, are each configured in an input/output port of the memory 31. The selectors 52, 53 operate dependent upon a control signal from a CPU 26 or a timing signal from a timing generating circuit 24. Furthermore, configured are coefficient units 51A, 51B to perform multiplying and adding operations on the data from an A/D converter 29. Consequently, the memory 31, the selectors 52, 53 and the coefficient units 51A, 51B configure a loop whereby the measurement data synchronous with disc rotation is processed with adding and averaging respectively for a land and a groove.

The signal which represents a variation amount due to the first-layer preformatted area (first-layer preformat-signal component) thus processed and extracted is sent to a recordation-correcting signal generating circuit 33 and a reproduction-correction signal generating circuit 37. In the recordation-correcting signal generating circuit 33 and the reproduction-correction signal generating circuit 37, a recordation-correcting signal and a reproduction-correcting signal are generated on the basis of the extracted data, e.g. by a similar method to that of the first embodiment.

Consequently, according to the embodiment, it is possible to eliminate the variation due to the preformatted area of the upper-layer with high accuracy since recordation correction or reproduction correction can be independently carried out on each of the land and the groove.

A modification to the embodiment is described below. As in the foregoing, there is a case that the variation due to the preformatted area of the other layer differs between the land and the groove. However, the provision of two correction-processing systems leads to circuit complication and size-increase or manufacture-cost increase. Accordingly, in this case, the processing systems may be integrated to average the respective variations on the land and the groove. Specifically, in Fig. 13, the selector 53 may be replaced with an averaging circuit to average the extracted data for the land and the groove. The recordation-correcting signal generating circuit 33 and the reproduction-correction signal generating circuit 37 may be configured to generate a correcting signal on the basis of the averaged extracted data.

### Fourth Embodiment

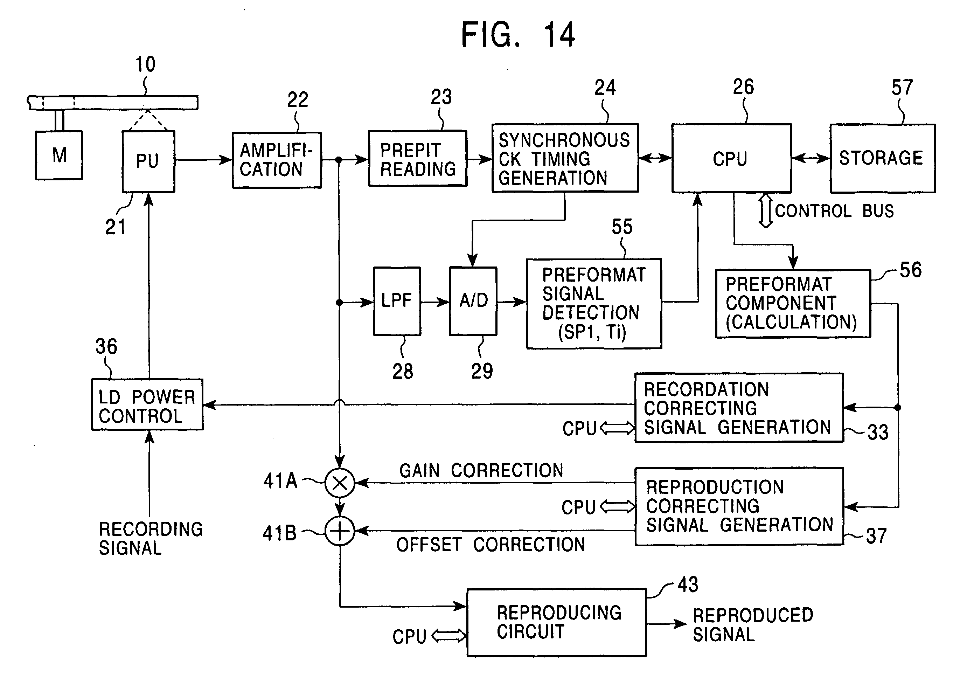

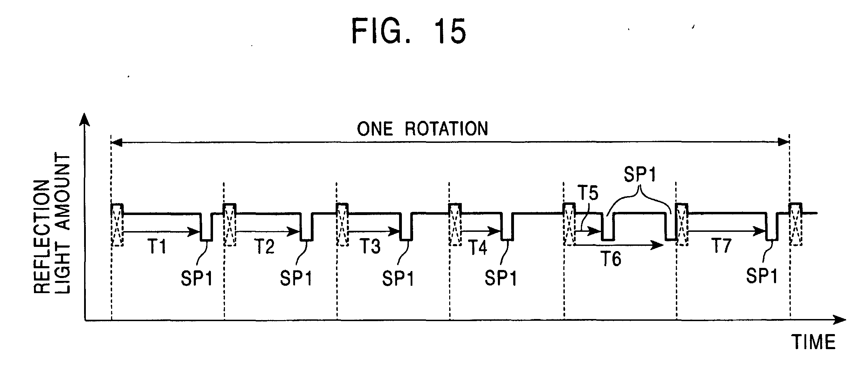

Fig. 14 is a block diagram showing a configuration of a recording/reproducing apparatus of a fourth embodiment of the present invention. In the recording/reproducing apparatus of the embodiment is provided with a first-layer preformat-signal detecting circuit 55. The preformat-signal detecting circuit 55 detects an occurrence time (Ti = 1, 2, ...) of a first-layer preformat-signal (SP1) with respect to a reference time from the data representing a reflection light amount through the A/D converter 29 and supplies the occurrence time to a CPU 26 as shown in Fig. 15. A timing signal from the timing generating circuit 24 can be used as the reference time. For example, the reference time can be due to a starting time or ending time of a preformat-signal (SP2) in the second layer being currently read.

The CPU 26 refers to the recording-layer characteristic data (transmittances of an amorphous and crystalline portions) stored in the storage device 57, a position of the first-layer preformatted area or a distance between the layers to calculate a variation amount due to a first-layer preformat-signal (i.e., preformat-signal component of the first-layer) on the basis of an occurrence time of the first-layer preformat-signal supplied from a preformat-signal detecting circuit 55. The calculation result is stored in a memory 56. The signal representing the calculated variation due to a first-layer preformatted area is sent to the recordation-correcting signal generating circuit 33 and the reproduction-correction signal generating circuit 37. In the recordation-correcting signal generating circuit 33 and the reproduction-correction signal generating circuit 37, a recordation-correcting signal and a reproduction-correcting signal is generated on the basis of the calculated data, for example, by a method similar to that of the foregoing embodiment.

Consequently, according to the embodiment, the required storage capacity can be greatly reduced since there is no need to store the data, as it is, which represents a variation due to a first-layer preformat-signal. Note that, in addition to the occurrence time (Ti) of a first-layer preformat-signal, the magnitude thereof (SP1) may be stored.

### Fifth Embodiment

The configuration of a recording/reproducing apparatus of a fifth embodiment of the present invention is similar to that of the fourth embodiment. In this embodiment, the occurrence time of a first-layer preformat-signal is calculated from an eccentricity amount and rotational-direction deviation between the recording layers, to carry out correction. The detail of the embodiment will be described below.

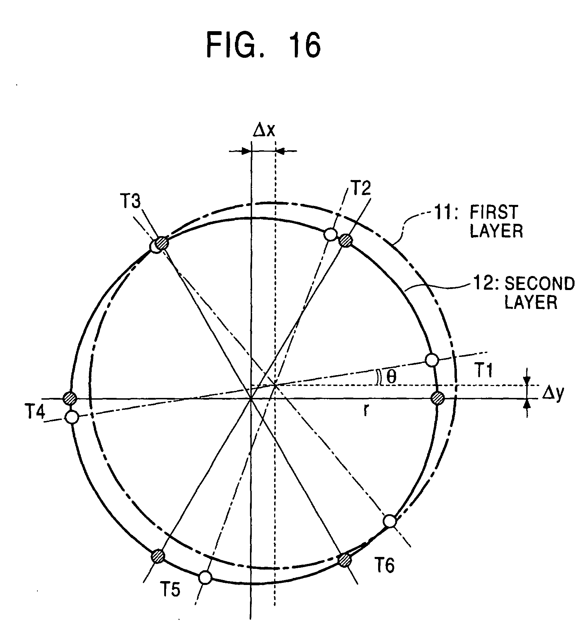

As shown in Fig. 16, when the recording layers are equal in the number of preformatted areas within the same zone and the eccentricity (Δx, Δy) and the deviation (θ) in a rotational direction between the recording layers of the disc is known, it is possible to calculate an occurrence time of a variation at a position of a radius (r) due to a first-layer preformat-signal.

In a similar manner to the fourth embodiment, the preformat-signal detecting circuit 55 detects an occurrence time (Ti, i = 1, 2, ...) of a first-layer preformat-signal (SP1) with respect to a reference time, and supplies the occurrence time to the CPU 26. A preformat-signal (SP2) in a layer (second layer) being currently read can be used as a reference time, for example.

The CPU 26 calculates the eccentricity (Δx, Δy) and the deviation (θ) in a rotational direction between the first layer 11 and the second layer 12 by using a first-layer preformat-signal occurrence time Ti, and stores the calculated data in the storage device 57. This processing is not required to perform on a track-by-track basis provided that the number of preformatted areas is constant within a zone. The CPU 26 calculates an occurrence time Ti of a first-layer preformat-signal from the radius on a track-by-track basis by the use of the stored data (Δx, Δy, θ). Then, similarly to the fourth embodiment, reference is made to the transmittances and the data of a position of a first-layer preformatted area, the distance between the layers and the like to calculate a variation due to a first-layer preformat-signal. The calculation result is stored in the memory 56. On the basis of a signal representing the calculated variation amount due to a first-layer preformatted area, a recordation-correcting signal and a reproduction-correcting signal is generated in the recordation-correcting signal generating circuit 33 and the reproduction-correction signal generating circuit 37.

Consequently, according to the embodiment, there is no need to store the data, as it is, representing a variation due to a first-layer preformat-signal. Also, because the frequency of performing measurements prior to recording or reproducing is reduced, it is possible to greatly reduce the required storage capacity and carry out a rapid operation.

### Sixth Embodiment

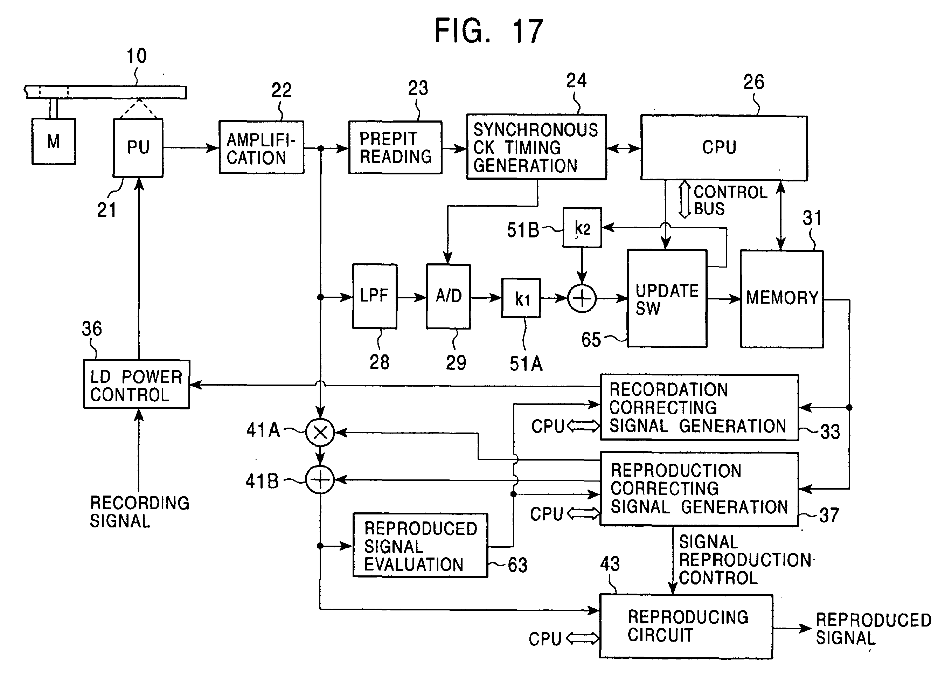

Fig. 17 is a block diagram showing a configuration of a recording/reproducing apparatus of a sixth embodiment of the present invention. The recording/reproducing apparatus of this embodiment has a configuration to evaluate a read signal from the amplifier circuit 22 and change a correcting-signal generation process in accordance with the evaluation result.

More particularly, an evaluation circuit 63 evaluates a reproduced RF signal from the amplifier circuit 22 by using a variation parameter. The variation parameter is, for example, a reflection light amount, a jitter value of the reproduced RF signal, a maximum value of an envelope (Itop), an amplitude and so on. The evaluation circuit 63 has an evaluation function or evaluation table for evaluation. The evaluation result is supplied to the recordation-correcting signal generating circuit 33 and the reproduction-correction signal generating circuit 37. The recordation-correcting signal generating circuit 33 and reproduction-correction signal generating circuit 37 is configured such that the parameter in a generation processing function or processing function for correcting-signal generation can be changed on the basis of a signal representing the evaluation result. For example, the recordation-correcting signal generating circuit 33 and the reproduction-correction signal generating circuit 37 have a plurality of processing functions or parameter tables. Or otherwise, they may be configured to change the generation process by the control of CPU 26.

Furthermore, an update switch 65 is provided to update the measurement data representative of a variation amount due to a first-layer preformat-signal to be sent to the memory 31. The update switch 65 is controlled by the CPU 26 to operate switching the data transfer to the memory 31 when changing the disc, changing the zone in a zone constant angular velocity (ZCAV) disc or changing the foregoing processing function.

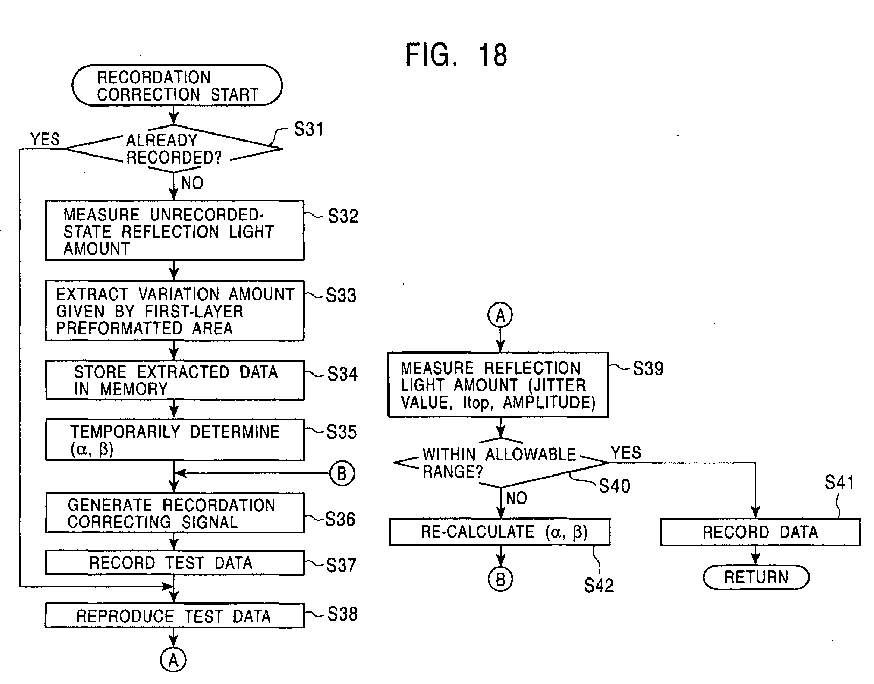

The correcting operation of the recording/reproducing apparatus during recording is described below, with reference to the flowchart shown in Fig. 18. Note that the recordation/reproduction correcting operation is implemented under control of the control section (CPU) 26. Also, in the below, description is made, as an example for changing a recordation processing function and reproduction processing function, on the case to change the coefficients and offsets (α, β), (γ, δ, ζ) in the recordation-correcting signal generating circuit 33 and reproduction-correction signal generating circuit 37, as in the case shown in the second embodiment (see Fig. 11).

It is determined whether the disc set on the recording/reproducing apparatus is already recorded or not (step S31). When it is determined that the disc is already recorded, the process moves to step S38. When it is determined that the disc is not recorded in step S31, measured is a change of a reflection light amount in an unrecorded state (step S32). From the measurement data of the reflection light amount, extracted is a variation amount due to the first-layer preformatted area (i.e., preformat-signal component of the first-layer) (step S33). The extracted data is stored in the memory 31 (step S34). The update switch 65 is opened to store the measurement data representing a variation amount due to a first-layer preformat-signal in the memory 31.

Then, a processing function in the recordation-correcting signal generating circuit 33 is temporarily defined. The temporary processing function uses a predetermined processing function given as initial setting. Otherwise, this may be defined on the basis of an extracted fist-layer preformat-signal component. In the embodiment, the coefficient and offset (α, β) in the recordation-correcting signal generating circuit 33 is temporarily defined (step S35).

A recordation-correcting signal is generated by using the temporary value (step S36), and predetermined test data is recorded on the basis of the recordation correcting signal (step S37). Then, the recorded test data is reproduced (step S38). In the evaluation circuit 63, a reflection light amount or a reproduced RF signal jitter value, Itop, amplitude, etc. is measured from the reproduced signal (step S39). The evaluation circuit 63 carries out evaluation with using an evaluation function or evaluation table, to determine whether an evaluation value is within an allowable range or not (step S40). When it is determined that the evaluation value is within the allowable range, a signal representing the determination result is sent to the CPU 26 thereby executing the recording of information data to be recorded (step S41) and exiting the present routine. Where not within an allowable range in step S40, a signal representing the determination result is sent to the CPU 26 thereby executing re-calculation of a coefficient and offset (α, β) (step S42). The result of re-calculation is sent to the recordation-correcting signal generating circuit 33, thus repeating step S36 and the following.

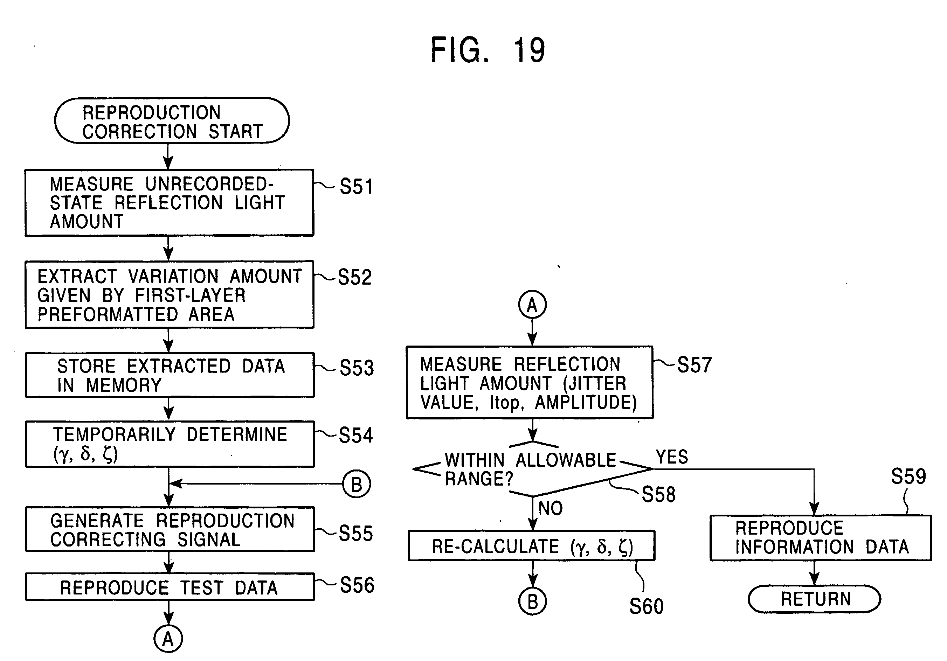

Then, the correcting operation of the recording/reproducing apparatus during reproduction is described below with reference to the flowchart shown in Fig. 19. Note that the reproduction correcting operation is implemented under control of the control section (CPU) 26. Also, it is carried out continuously with the recordation correcting operation, simultaneously by a double-loop configuration or independently of the recordation correcting operation.

A change in a reflection light amount of a disc recording area is measured (step S51). A variation amount due to a first-layer preformatted area (i.e., preformat-signal component of the first-layer) is extracted from the measurement data of a reflection light amount (step S52). The extracted data is stored in the memory 31 (step S53).

Then, a processing function in the reproduction-correction signal generating circuit 37 is temporarily defined. The temporary processing function uses a predetermined processing function given as an initial setting. Otherwise, it may be defined on the basis of an extracted first-layer preformat-signal component. In this embodiment, a coefficient and offset (γ, δ, ζ) for the reproduction-correction signal generating circuit 37 is temporarily defined (step S54).

A reproduction-correcting signal is generated using the temporary value (step S55), and predetermined test data is reproduced on the basis of the reproduction-correcting signal (step S56). In the evaluation circuit 63, a reflection light amount or a reproduced RF signal jitter value, Itop, amplitude, etc. is measured from the reproduced signal (step S57). The evaluation circuit 63 evaluates with using an evaluation function or evaluation table, to determine whether an evaluation value is within an allowable range or not (step S58). Where determined within an allowable range, a signal representing the determination is sent to the CPU 26 thereby carrying out reproduction of information data to be reproduced (step S59) and exiting the present routine. Where not within an allowable range in step S58, a signal representing the determination is sent to the CPU 26 thereby carrying out the re-calculation of a coefficient and offset (γ, δ, ζ) (step S60). The result of re-calculation is sent to the reproduction-correction signal generating circuit 37, repeating the steps of the step S55 and the following.

Consequently, according to the embodiment, high-performance recordation and reproduction can be performed since a reproduction correcting signal is detected to carry out recording correction and reproducing correction so as to obtain a favorable reproduced signal.

A modification to the embodiment is described below. Although the foregoing embodiment described on the case that the measurement of a first-layer preformat-signal component and change of a processing function is made each time a disc is set, a measurement and/or processing function change may be made as required. For example, the measurement of a firs-layer preformat-signal component and a change of a processing function may be made each time a zone is changed during recordation to or reproduction from a ZCAV disc.

Also, the foregoing embodiment described on the case that, where an evaluation value is out of an allowable range, a processing-function coefficient and offset is calculated to chang the processing function. However, where the evaluation value becomes outside the allowable range, the processing function may be changed after measuring a first-layer preformat-signal component.

As described in detail above, according to the present invention, it is possible to provide a high-performance multi-layer optical rotary recording medium for stable recordation and/or reproduction and a recording/reproducing method with the multi-layer optical rotary recording medium.

Incidentally, the foregoing embodiments, although described on the example of a two-layer optical disc, are applicable also to an optical disc having a plurality of recording layers.

Also, the foregoing embodiments are mere exemplification, which can be applied with proper modification or combination in various ways.

As apparent from the foregoing, the present invention can provide a high-performance multi-layer optical rotary recording medium for stable recordation and/or reproduction and a method for recording/reproducing the multi-layer optical rotary recording medium.

The invention has been described with reference to the preferred embodiments thereof. It should be understood by those skilled in the art that a variety of alterations and modifications may be made from the embodiments described above. It is therefore contemplated that the appended claims encompass all such alterations and modifications.

## Claims

1. A recordable multi-layer optical recording medium laminated with a plurality of recording layers each having data recording areas divided in a tracing direction of a light beam by preformatted areas, wherein;
said preformatted areas are formed without any overlap with one another in a laminated direction between the recording layers.

2. A recording method of a recordable multi-layer rotary recording medium having a plurality of recording layers each having data recording areas divided in a tracing direction of a light beam by preformatted areas, comprising the steps of:
a reading step of detecting a reflection light from a recording layer to which a recording is to be made and converting the detected light into a read signal;
a detecting step of detecting a position of a preformatted area of a recording layer which said optical beam transmits therethrough other than the recording layer to which a recording is to be made; and
a correcting step of correcting intensity of an irradiation light beam upon recording based on said read signal and the preformatted area position.

3. A recording method according to claim 2. wherein said correcting step corrects intensity of an irradiation light beam upon recording based on a component of the read signal synchronized with rotation of said multi-layer rotary recording medium.

4. A recording method according to claim 2, wherein said correcting step performs correction based on size of said preformatted area of a recording layer which said optical beam transmits therethrough other than the recording layer to which a recording is to be made and a distance between the recording layer which said optical beam transmits therethrough and the recording layer to which a recording is to be made.

5. A recording method according to claim 2, wherein said correcting step corrects intensity of an irradiation light beam upon recording based on a low-frequency band component of said read signal.

6. A recording method according to claim 2, wherein said multi-layer rotary recording medium comprises a land-and-groove structure formed by lands and grooves, said reading step and said correcting step being executed for each of said lands and said grooves.

7. A recording method according to claim 6, further comprising an averaging step of averaging read signals for said lands and said grooves, said correcting step being executed to correct intensity of an irradiation light beam upon recording based on an averaged read signal.

8. A recording method according to claim 2, wherein said reading step measures time of the read signal with respect to, as a reference time, a detection time of a reflection light from said preformatted area of the recording layer to which a recording is to be made, said correcting step correcting intensity of an irradiation light beam upon recording based on said reference time.

9. A recording method according to claim 2, wherein said reading step measures time of the read signal with respect to, as a reference time, a detection time of a reflection light from said preformatted area to which a recording is to be made, said correcting step correcting intensity of an irradiation light beam upon recording based on the reference time, a reflection light intensity in said preformatted area of the recording layer which said optical beam transmits therethrough other than the recording layer to which a recording is to be made and a distance between the recording layer which said optical beam transmits therethrough and the recording layer to which a recording is to be made.

10. A recording method according to claim 2, further comprising a step of calculating from said read signal an eccentricity amount and a rotation angle deviation of at least one other recording layer with respect to the recording layer to which a recording is to be made, a step of storing the eccentricity amount and the rotation angle deviation for each recording layer and a step of calculating a correction time and a correction value for each of the at least one other recording layer from the eccentricity amount and the rotation angle deviation, wherein said correcting step corrects intensity of an irradiation light beam upon recording based on said correction time and said correction value.

11. A recording method according to claim 2, wherein said correcting step includes an adjusting step of adjusting a correction value on the basis of a variation in a variation parameter of said read signal due to execution of the correction.

12. A recording method according to claim 11, wherein said variation parameter is a jitter amount of said read signal.

13. A recording method according to claim 11, wherein said variation parameter is an amplitude of said read signal.

14. A recording method according to claim 11, wherein said variation parameter is a magnitude of an envelope of said read signal.

15. A recording method according to claim 11, wherein said adjusting step adjusts said correction value when a variation in said variation parameter exceeds a predetermined value.

16. A recording method according to claim 2, further comprising a determining step of determining a change of the multi-layer rotary recording medium to which a recording is to be made, to execute said reading step and said correcting step in order in accordance with a determination result in said determining step.

17. A recording method according to claim 2, wherein said multi-layer rotary recording medium is a zone constant angular velocity (ZCAV) disc, said determining step includes an identifying step of identifying a change of a zone to which a recording is to be made, to execute said reading step and said correcting step in order in accordance with an identification result in said identifying step.

18. A reproducing method of a recordable multi-layer rotary recording medium having a plurality of recording layers each having data recording areas divided in a tracing direction of a light beam by preformatted areas, comprising the steps of:
a reading step of detecting a reflection light from a recording layer from which a reproduction is to be made and converting the detected light into a read signal:
a detecting step of detecting a position of a preformatted area of a recording layer which said optical beam transmits therethrough other than the recording layer from which a reproduction is to be made; and
a correcting step of correcting a reproduced signal upon reproduction on the basis of said read signal and the preformatted area position.

19. A reproducing method according to claim 18, wherein said correcting step corrects a reproduced signal upon reproduction on the basis of a component of the read signal synchronized with rotation of said multi-layer rotary recording medium.

20. A reproducing method according to claim 18, wherein said correcting step performs correction based on size of said preformatted area of a recording layer which said optical beam transmits therethrough other than the recording layer from which a reproduction is to be made and a distance between the recording layer which said optical beam transmits therethrough and the recording layer from which a reproduction is to be made.

21. A reproducing method according to claim 18, wherein said correcting step corrects a reproduced signal upon reproduction on the basis of a low-frequency band component of said read signal.

22. A reproducing method according to claim 18, wherein said multi-layer rotary recording medium comprises a land-and-groove structure formed by lands and grooves, said reading step and said correcting step being executed for each of said lands and said grooves.

23. A reproducing method according to claim 22, further comprising an averaging step of averaging read signals for said lands and said grooves, said correcting step being executed to correct a reproduced signal upon reproduction on the basis of an averaged read signal.

24. A reproducing method according to claim 18, wherein said reading step measures time of the read signal with respect to as a reference time, a detection time of a reflection light from said preformatted area of the recording layer from which a reproduction is to be made, said correcting step correcting a reproduced signal upon reproduction on the basis of said reference time.

25. A reproducing method according to claim 18, wherein said reading step measures time of the read signal with respect to as a reference time, a detection time of a reflection light from said preformatted area from which a reproduction is to be made, said correcting step correcting a reproduced signal upon reproduction on the basis of the reference time, a reflection light intensity in said preformatted area of the recording layer which said optical beam transmits therethrough other than the recording layer from which a reproduction is to be made and a distance between the recording layer which said optical beam transmits therethrough and the recording layer from which a reproduction is to be made.

26. A reproducing method according to claim 18, further comprising a step of calculating from said read signal an eccentricity amount and a rotation angle deviation of at least one other recording layer with respect to the recording layer from which a reproduction is to be made, a step of storing the eccentricity amount and the rotation angle deviation for each recording layer and a step of calculating a correction time and a correction value for each of the at least one other recording layer from the eccentricity amount and the rotation angle deviation, wherein said correcting step corrects a reproduced signal upon reproduction on the basis of said correction time and said correction value.

27. A reproducing method according to claim 18, wherein said correcting step includes an adjusting step of adjusting a correction value on the basis of a variation in a variation parameter of .said read signal due to execution of the correction.

28. A reproducing method according to claim 27, wherein said variation parameter is a jitter amount of said read signal.

29. A reproducing method according to claim 27, wherein said variation parameter is an amplitude of said read signal.

30. A reproducing method according to claim 27, wherein said variation parameter is a magnitude of an envelope of said read signal.

31. A reproducing method according to claim 27, wherein said adjusting step adjusts said correction value when a variation in said variation parameter exceeds a predetermined value.

32. A reproducing method according to claim 18, further comprising a determining step of determining a change of the multi-layer rotary recording medium from which a reproduction is to be made, to execute said reading step and said correcting step in order in accordance with a determination result in said determining step.

33. A reproducing method according to claim 18, wherein said multi-layer rotary recording medium is a zone constant angular velocity (ZCAV) disc, said determining step includes an identifying step of identifying a change of a zone from which a reproduction is to be made, to execute said reading step and said correcting step in order in accordance with an identification result in said identifying step.

34. A recording apparatus of a recordable multi-layer rotary recording medium having a plurality of recording layers each having data recording areas divided in a tracing direction of a light beam by preformatted areas, comprising:
a reading portion for detecting a reflection light from a recording layer to which a recording is to be made and converting the detected light into a read signal;
a detecting portion for detecting a position of a preformatted area of a recording layer which said optical beam transmits therethrough other than the recording layer to which a recording is to be made; and
a correcting portion for correcting intensity of an irradiation light beam upon recording based on said read signal and the preformatted area position.

35. A recording apparatus according to claim 34, wherein said correcting portion corrects intensity of an irradiation light beam upon recording based on a component of the read signal synchronized with rotation of said multi-layer rotary recording medium.

36. A recording apparatus according to claim 34, wherein said correcting portion performs correction based on size of said preformatted area of a recording layer which said optical beam transmits therethrough other than the recording layer to which a recording is to be made and a distance between the recording layer which said optical beam transmits therethrough and the recording layer to which a recording is to be made.

37. A recording apparatus according to claim 34, wherein said correcting portion corrects intensity of an irradiation light beam upon recording based on a low-frequency band component of said read signal.

38. A recording apparatus according to claim 34, wherein said multi-layer rotary recording medium comprises a land-and-groove structure formed by lands and grooves, the detection in said reading portion and the correction in said correcting portion being executed for each of said lands and said grooves.

39. A recording apparatus according to claim 38, further comprising an averaging portion for averaging read signals for said lands and said grooves, said correcting portion correcting intensity of an irradiation light beam upon recording based on an averaged read signal.

40. A recording apparatus according to claim 34, wherein said reading portion measures time of the read signal with respect to, as a reference time, a detection time of a reflection light from said preformatted area of the recording layer to which a recording is to be made, said correcting portion correcting intensity of an irradiation light beam upon recording based on said reference time.

41. A recording apparatus according to claim 34, wherein said reading portion measures time of the read signal with respect to, as a reference time, a detection time of a reflection light from said preformatted area to which a recording is to be made, said correcting portion correcting intensity of an irradiation light beam upon recording based on the reference time, a reflection light intensity in said preformatted area of the recording layer which said optical beam transmits therethrough other than the recording layer to which a recording is to be made and a distance between the recording layer which said optical beam transmits therethrough and the recording layer to which a recording is to be made.

42. A recording apparatus according to claim 34, further comprising a portion for calculating from said read signal an eccentricity amount and a rotation angle deviation of at least one other recording layer with respect to the recording layer to which a recording is to be made, a portion for storing the eccentricity amount and the rotation angle deviation for each recording layer and a portion for calculating a correction time and a correction value for each of the at least one other recording layer from the eccentricity amount and the rotation angle deviation, wherein said correcting portion corrects intensity of an irradiation light beam upon recording based on said correction time and said correction value.

43. A recording apparatus according to claim 34, wherein said correcting portion includes an adjusting portion for adjusting a correction value on the basis of a variation in a variation parameter of said read signal due to execution of the correction.

44. A recording apparatus according to claim 43, wherein said variation parameter is a jitter amount of said read signal.

45. A recording apparatus according to claim 43, wherein said variation parameter is an amplitude of said read signal.

46. A recording apparatus according to claim 43, wherein said variation parameter is a magnitude of an envelope of said read signal.

47. A recording apparatus according to claim 43, wherein said adjusting portion adjusts said correction value when a variation in said variation parameter exceeds a predetermined value.

48. A recording apparatus according to claim 34, further comprising a determining portion for determining a change of the multi-layer rotary recording medium to which a recording is to be made.

49. A recording apparatus according to claim 34, wherein said multi-layer rotary recording medium is a zone constant angular velocity (ZCAV) disc, said determining portion includes an identifying portion for identifying a change of a zone to which a recording is to be made.

50. A reproducing apparatus of a recordable multi-layer rotary recording medium having a plurality of recording layers each having data recording areas divided in a tracing direction of a light beam by preformatted areas, comprising:
a reading portion for detecting a reflection light from a recording layer from which a reproduction is to be made and converting the detected light into a read signal;
a detecting portion for detecting a position of a preformatted area of a recording layer which said optical beam transmits therethrough other than the recording layer from which a reproduction is to be made; and
a correcting portion for correcting a reproduced signal upon reproduction on the basis of said read signal and the preformatted area position.

51. A reproducing apparatus according to claim 50, wherein said correcting portion corrects a reproduced signal upon reproduction on the basis of a component of the read signal synchronized with rotation of said multi-layer rotary recording medium.

52. A reproducing apparatus according to claim 50, wherein said correcting portion performs correction based on size of said preformatted area of a recording layer which said optical beam transmits therethrough other than the recording layer from which a reproduction is to be made and a distance between the recording layer which said optical beam transmits therethrough and the recording layer from which a reproduction is to be made.

53. A reproducing apparatus according to claim 50, wherein said correcting portion corrects a reproduced signal upon reproduction on the basis of a low-frequency band component of said read signal.

54. A reproducing apparatus according to claim 50, wherein said multi-layer rotary recording medium comprises a land-and-groove structure formed by lands and grooves, said reading portion and said correcting portion being executed for each of said lands and said grooves.

55. A reproducing apparatus according to claim 54, further comprising an averaging portion for averaging read signals for said lands and said grooves, said correcting portion correcting a reproduced signal upon reproduction on the basis of an averaged read signal.

56. A reproducing apparatus according to claim 50, wherein said reading portion measures time of the read signal with respect to, as a reference time, a detection time of a reflection light from said preformatted area of the recording layer from which a reproduction is to be made, said correcting portion correcting a reproduced signal upon reproduction on the basis of said reference time.

57. A reproducing apparatus according to claim 50, wherein said reading portion measures time of the read signal with respect to, as a reference time, a detection time of a reflection light from said preformatted area from which a reproduction is to be made, said correcting portion correcting a reproduced signal upon reproduction on the basis of the reference time, a reflection light intensity in said preformatted area of the recording layer which said optical beam transmits therethrough other than the recording layer from which a reproduction is to be made and a distance between the recording layer which said optical beam transmits therethrough and the recording layer from which a reproduction is to be made.

58. A reproducing apparatus according to claim 50, further comprising a portion for calculating from said read signal an eccentricity amount and a rotation angle deviation of at least one other recording layer with respect to the recording layer from which a reproduction is to be made, a portion for storing the eccentricity amount and the rotation angle deviation for each recording layer and a portion for calculating a correction time and a correction value for each of the at least one other recording layer from the eccentricity amount and the rotation angle deviation, wherein said correcting portion corrects a reproduced signal upon reproduction on the basis of said correction time and said correction value.

59. A reproducing apparatus according to claim 50, wherein said correcting portion includes an adjusting portion for adjusting a correction value on the basis of a variation in a variation parameter of said read signal due to execution of the correction.

60. A reproducing apparatus according to claim 59, wherein said variation parameter is a jitter amount of said read signal.

61. A reproducing apparatus according to claim 59, wherein said variation parameter is an amplitude of said read signal.

62. A reproducing apparatus according to claim 59, wherein said variation parameter is a magnitude of an envelope of said read signal.

63. A reproducing apparatus according to claim 59, wherein said adjusting portion adjusts said correction value when a variation in said variation parameter exceeds a predetermined value.

64. A reproducing apparatus according to claim 50, further comprising a determining portion for determining a change of the multi-layer rotary recording medium from which a reproduction is to be made.

65. A reproducing apparatus according to claim 50, wherein said multi-layer rotary recording medium is a zone constant angular velocity (ZCAV) disc. said determining portion includes an identifying portion for identifying a change of a zone from which a reproduction is to be made.
